# EUROPÄISCHE PATENTSCHRIFT

(11) **EP 0 236 878 B1**
(45) Veröffentlichungstag und Bekanntmachung des Hinweises auf die Patenterteilung: **08.12.1993**
(21) Anmeldenummer: 87102802.3
(22) Anmeldetag: 27.02.1987
(51) Int. Cl.: H04M 9/00, H04M 11/04, H04Q 3/62

(54) **Kleine Fernsprechnebenstellenanlage, insbesondere Reihenanlage**
Small private telephone exchange, especially a key telephone exchange
Petit central téléphonique privé, en particulier central à postes à lignes multiples

(30) Priorität: 08.03.1986 DE 3607717
(43) Veröffentlichungstag der Anmeldung: 16.09.1987
(73) Patentinhaber: TELENORMA GMBH, 60326 Frankfurt am Main (DE)
(72) Erfinder: Steuer, Manfred, Dipl.-Ing., D-6238 Hofheim (DE)

(56) Entgegenhaltungen:
- DE-A- 2 302 588
- DE-A- 2 534 228
- GB-A- 1 175 969
- GB-A- 1 313 752
- GB-A- 2 106 354

## Beschreibung

Die Erfindung betrifft eine kleine Fernsprechnebenstellenanlage, insbesondere Reihenanlage mit einem, durch eine Steuereinrichtung einstellbaren Koppelfeld, dessen Ein- bzw. Ausgänge mit Anschlußschaltungen zum Anschluß von Teilnehmeranschlußleitungen, Verbindungsleitungen usw. verbunden sind, wobei in den Anschlußschaltungen der Empfang und die Aussendung der Gleichstromsignalisierungszeichen erfolgt und zur Übermittlung der Signalisierungsinformationen sämtliche Anschlußschaltungen über ein Bussystem mit der Steuereinrichtung verbunden sind. Eine derartige kleine Fernsprechnebenstellenanlage oder Reihenanlage ist bereits bekannt. So wird in der DE-A 23 02 588 eine Schaltungsanordnung für Fernsprechreihenanlagen beschrieben, bei welcher Anschlußschaltungen zum Anschluß von Teilnehmeranschlußleitungen und Verbindungsleitungen an einer Koppelmatrix angeschlossen sind. Die Anschlußschaltungen sind dabei über ein Bussystem mit der Steuereinrichtung verbunden, welche die Durchschaltung der Verbindungen innerhalb der Koppelmatrix aufgrund der über Bussystem übertragenen Informationen durchführt. Eine ähnliche Reihenanlage wird auch in der Druchschrift "Elektrisches Nachrichtenwesen", Band 52, (1977), Nr. 3 auf den Seiten 268 bis 271 beschrieben.

Derartige Reihenanlagen weisen in der Regel nur eine geringe Anzahl von Teilnehmeranschlüssen auf und stellen somit die kleinste Ausführungsform einer Fernsprechnebenstellenanlage dar. Aufgrund ihres günstigen Preises sind sie besonders in kleinen Betrieben und Büros weit verbreitet. Auch bei diesen Einrichtungen besteht der Bedarf für Gefahrenmeldeanlagen, die jedoch in der Regel sehr kostspielig sind.

Die Aufgabe der Erfindung besteht nun darin, eine kleine Fernsprechnebenstellenanlage oder Reihenanlage derart zu modifizieren, daß sie auch zur Bewältigung der Aufgaben einer Gefahrenmeldeanlage herangezogen werden kann.

Diese Aufgabe wird dadurch gelöst, daß eine Alarmeinrichtung vorgesehen ist, welche anstelle einer Anschlußschaltung einsetzbar ist, daß diese einen oder mehrere Alarmdetektoren aufweist, welche jeweils mit einer Alarmschleife verbindbar sind und daß die Alarmeinrichtung bei Ansprechen eines Alarmdetektors die Steuereinrichtung der Fernsprechnebenstellen- oder Reihenanlage über das Bussystem veranlaßt wird, eine Verbindung zu einem oder mehreren vorbestimmten internen oder externen Teilnehmeranschluß bzw. Teilnehmeranschlüssen aufzubauen.

Die Alarmeinrichtung weist demnach zum Koppelfeld und zur Steuereinrichtung eine der Anschlußschaltung entsprechende Schnittstelle auf, so daß bei der Fertigung oder auch nachträglich die Fernsprechnebenstellen- oder Reihenanlage mit der zusätzlichen Funktion als Gefahrenmeldeanlage ausgestattet werden kann. Die Alarmschleifen dienen zum Anschluß von Brandmeldern, Feuermeldern, Raumsicherungseinrichtungen, usw. Sobald einer dieser Melder anspricht, wird dies von dem betreffenden Alarmdetektor erkannt und aufgrund eines entsprechenden Signals über das Bussystem die Steuereinrichtung zu einem Verbindungsaufbau zu einer vorgegebenen Stelle veranlaßt.

Es ist bereits bekannt, über eine Hausanlage einen bestimmten Funktionszustand, wie beispielsweise ein geöffnetes Tor, ein akustisches oder optisches Signal auszulösen (siehe DE-A 29 46 177).

In der GB-OS 2 106 354 wird eine Alarmeinrichtung beschrieben, welche an einer öffentlichen Vermittlungsanlage entweder ausschließlich oder alternativ zu einem Fernsprechapparat angeschlossen ist. Die bekannte Alarmeinrichtung ist in der Lage, im Alarmfall einen selbsttätigen Verbindungsaufbau zu einem vorgegebenen Teilnehmeransschluß der öffentlichen Vermittlungsanlage zu veranlassen, damit selbsttätig Alarmmeldungen durchgegeben werden können.

Eine Weiterbildung der Erfindung besteht darin, daß die Alarmeinrichtung eine eigene Steuereinrichtung mit einem Speicher mit mindestens einer Kennung oder Rufnummer aufweist.

Die Rufnummern der vorbestimmten internen oder externen Teilnehmeranschlüsse können nun entweder in der Steuereinrichtung der Alarmeinrichtung eingespeichert sein und im Alarmfall an die Steuereinrichtung der Fernsprechnebenstellen- oder Reihenanlage weitergegeben werden oder dieser Speicher kann entsprechende Kennungen in Form von Datenworten enthalten, welche von der Steuereinrichtung der Alarmeinrichtung über das Bussystem der Steuereinrichtung der Fernsprechnebenstellen- oder Reihenanlage übermittelt werden und dort zur Kennzeichnung der betreffenden, auszusendenden Rufnummer dienen.

Eine Weiterbildung der Erfindung besteht auch darin, daß in Abhängigkeit vom Ansprechen unterschiedliche Alarmdetektoren unterschiedliche Teilnehmeranschlüsse angewählt werden.

Hierdurch ist es möglich, je nach Art der Alarmmeldung entweder einen internen oder einen externen Teilnehmeranschluß anzuwählen.

Weitere Vorteile ergeben sich aus den Unteransprüchen.

Die Erfindung wird anhand eines Ausführungsbeispiels näher erläutert, welches in der Zeichnung dargestellt ist.
Es zeigt:
- Fig. 1: das Blockschaltbild einer kleinen Fernsprechnebenstellen- oder Reihenanlage und
- Fig. 2: das Blockschaltbild der Alarmeinrichtung.

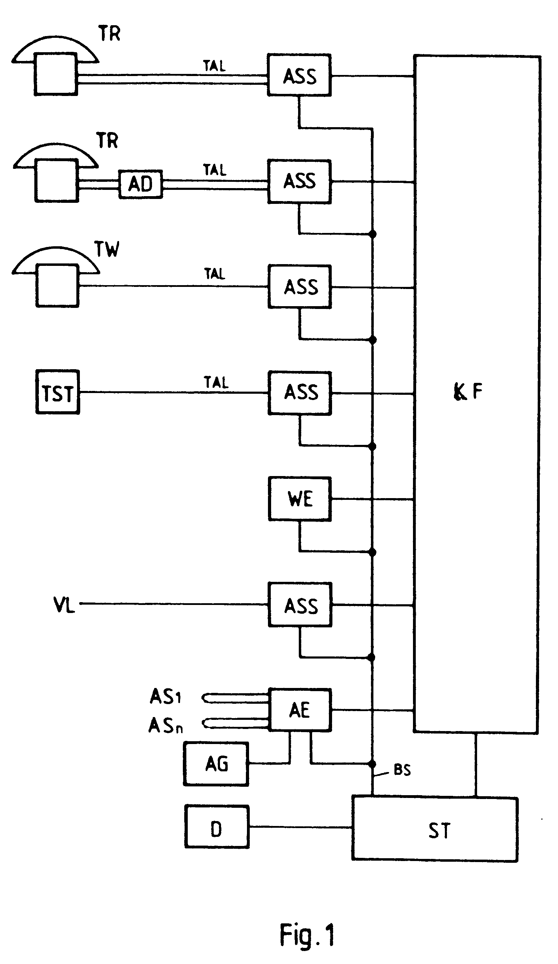

Das in Fig. 1 gezeigte Blockschaltbild einer kleinen Fernsprechnebenstellen- oder Reihenanlage weist ein Koppelfeld KF auf, an welchem eine Vielzahl von Anschlußschaltungen ASS zum Anschluß von Teilnehmeranschlußleitungen TAL und Verbindungsleitungen VL angeschlossen sind. Die Teilnehmeranschlußleitungen TAL dienen beispielsweise zum Anschluß von Reihenapparaten TR, Wählapparaten TW, einer Torstation TST, usw. Während bei den beiden letzteren die Teilnehmeranschlußleitung TAL zweiadrig ausgeführt ist, besteht die Teilnehmeranschlußleitung TAL bei den Reihenapparaten TR aus vier Adern, wobei zwei Adern für die Übertragung der Sprachsignale und zwei Adern für die Übertragung von Steuer- und Signalisierungsinformationen dienen. Während die Gleichstromsignalisierungszeichen in den Anschlußschaltungen ASS ausgewertet werden, darunter auch die Wahlinformation in Form von Nummernschalterimpulsen, sind für die Aufnahme der Wahlinformation nach dem MF-(Mehrfrequenz-)Verfahren übertragenen Wahlinformationen ein oder mehrere Wahlempfänger WE vorgesehen. Sämtliche Einrichtungen ASS, WE, AE sind zweiadrig am Koppelfeld KF angeschlossen, welches zur Verbindung der genannten Einrichtungen untereinander dient. Die Einstellinformationen erhält das Koppelfeld aus der Steuereinrichtung ST der Fernsprechnebenstellen- oder Reihenanlage.

Der Datenaustausch zwischen den Einrichtungen ASS, WE, AE und der Steuereinrichtung ST wird über das Bussystem BS abgewickelt. Dies kann beispielsweise dadurch geschehen, daß die Steuereinrichtung ST nacheinander diese Einrichtungen zyklisch ansteuert, wobei während der Ansteuerungsphase Informationen von beispielsweise einer Anschlußschaltung ASS zur Steuereinrichtung ST und umgekehrt übertragen werden können. Die Übermittlung der Informationen erfolgt in Form von Datenworten und zwar entweder seriell oder parallel.

In der Anschlußschaltung ASS, an welcher ein Wählapparat TW angeschlossen ist, wird beispielsweise das Aus- und Einhängen des Apparates die Betätigung der Erdtaste, erkannt und an die Steuereinrichtung ST gemeldet, ebenso werden die in Form von Gleichstromimpulsserien eintreffenden Ziffern der Wahlinformation empfangen und in Form von entsprechenden Datenworten an die Steuereinrichtung ST weitergegeben, andererseits veranlaßt die Steuereinrichtung ST durch Übermittlung entsprechender Datenworte das Einspeisen Hörtöne und des Rufstroms in der Anschlußschaltung ASS. In gleicher Weise werden die von dem Reihenapparat TR auf der hierfür vorgesehenen Leitung übertragenen Steuerinformationen in der Anschlußschaltung ASS empfangen,ausgewertet und in Form von Datenworten an die Steuereinrichtung ST weitergegeben. In umgekehrter Richtung sendet die Steuereinrichtung an die Anschlußschaltung ASS Einstellinformationen für Lampenanzeigen im Reihenapparat TR. Die im Wahlempfänger WE eintreffenden MFV-Signale werden dort empfangen und die betreffende Rufnummerinformation in Form der besagten Datenworte an die Steuereinrichtung ST weitergegeben. In der Anschlußschaltung ASS, an welcher die Torstation TST angeschlossen ist, wird die Betätigung des Klingelknopfes ausgewertet und an die Steuereinrichtung ST durch Übermittlung eines entsprechenden Datenwortes gemeldet. Dieses Signal dient in der Steuereinrichtung ST zur Veranlassung einer Verbindung im Koppelfeld KF mit einem vorbestimmten Fernsprechapparat.

Die Alarmeinrichtung AE ist ebenfalls am Koppelfeld KF und am Bussystem BS angeschlossen und weist demnach die gleiche Schnittstelle auf, wie die übrigen Anschlußschaltungen ASS. Sind diese jeweils einmal oder mehrmals auf einer Steckbaugruppe enthalten, so können eine oder mehrere Anschlußschaltungen ASS durch eine oder mehrere Alarmeinrichtungen AE durch einfaches Auswechseln derselben ersetzt werden. An der Alarmeinrichtung AE können eine Vielzahl von Alarmschleifen AS1 bis ASn angeschlossen werden. In diesen Schleifen können nun Türkontakte, Brandmelder, Feuermelder, Auslösekontakte für Raumüberwachungsanlagen, usw. liegen. Die Überwachung jeder Alarmschleife AS erfolgt durch einen schleifenindividuelen Alarmdetektor. Bei Ansprechen desselben meldet sich dieser in der Alarmeinrichtung AE und wird identifiziert. Ein Alarmfall kann nun auf der an der Alarmeinrichtung AE angeschlossenen Alarmanzeigevorrichtung AG optisch und/oder akustisch angezeigt werden. Ebenso kann im Alarmfall eine in der Alarmeinrichtung AE eingespeicherte Rufnummer über das Bussystem BS an die Steuereinrichtung ST übermittelt werden, welche daraufhin die Verbindung mit dem betreffenden Teilnehmeranschluß im Koppelfeld KF veranlaßt. Dieser Teilnehmeranschluß kann entweder ein Teilnehmeranschluß der betreffenden Fernsprechnebenstellen- oder Reihenanlage oder auch ein Teilnehmeranschluß einer an einer Verbindungsleitung VL angeschlossenen Vermittlungsstelle sein. Unterschiedliche Alarmdetektoren können auch Verbindungen zu unterschiedlichen Teilnehmeranschlüssen sowohl intern als auch extern auslösen, wobei hierzu selbstverständlich die unterschiedlichen Rufnummern in der Alarmeinrichtung AE eingespeichert sein müssen.

Eine Alarmschleife AS kann auch zur Sicherung des Gehäuses der Fernsprechnebenstellen- oder Reihenanlage dienen, so daß bei dessen unbefugten Öffnen ebenfalls ein Alarm ausgelöst wird. Es ist auch denkbar, sowohl die Unversehrtheit der Teilnehmeranschlußleitungen TAL als auch die Vollständigkeit der Baugruppen mit Ausnahme der Steuereinrichtung ST zyklisch zu überwachen und bei einem Fehlerfall ebenfalls eine Alarmmeldung in der beschriebenen Art und Weise abzusetzen. Es ist weiterhin möglich, über einen Reihenapparat TR oder einen Wählapparat TW oder auch über eine Verbindung über die Verbindungsleitung VL durch Wahl entsprechender Ziffern die Steuereinrichtung zur Aussendung eines entsprechenden Datenwortes zu veranlassen, welches an die Alarmeinrichtung AE gesendet wird und dort deren Aktivierung zur Folge hat. In gleicher Weise ist auch eine Deaktivierung möglich. Die Zulässigkeit derartiger Manipulationen kann durch die zusätzliche Übermittlung eines in der Steuereirnichtung ST zu überprüfenden Kennwortes sichergestellt werden. Eine weitere Möglichkeit zur Auslösung einer Alarmmeldung besteht darin, daß eine bestimmte Taste eines Reihenapparates TR als Notruftaste ausgebildet ist. Die Betätigung derselben hat die Übermittlung eines entsprechenden Datenwortes an die Steuereinrichtung ST zur Folge, welches anschließend ebenfalls zum Aufbau einer Verbindung zu einem vorbestimmten Anschluß dient. Zum Protokollieren sämtlicher Alarmmeldungen kann an der Steuereinrichtung ST ein Drucker D angeschlossen werden.

Selbstverständlich besteht auch die Möglichkeit, die Rufnummern derjenigen Teilnehmeranschlüsse, zu denen im Alarmfall eine Verbindung aufzubauen ist, in der Steuereinrichtung ST selbst einzuspeichern. Dies ist vor allem dann notwendig, wenn das Herausziehen der Steckbaugruppe der Alarmeinrichtung AE überwacht und zur Alarmauslösung herangezogen wird. Neben einer optischen und akustischen Anzeige an der Anzeigevorrichtung AG ist selbstverständlich auch eine derartige Anzeige an einem oder mehreren Reihenapparaten TR möglich. In die Leitung zur Übermittlung der Steuer- und Einstellinformationen der Teilnehmeranschlußleitung TAL eines Reihenapparates TR kann auch ein Alarmdetektor eingeschleift sein, welcher mit einer Alarmschleife beschaltet ist. Bei dessen Ansprechen wird ein entsprechendes Signal zur Anschlußschaltung ASS übermittelt, worauf an die Steuereinrichtung ST ein den Alarmfall kennzeichnendes Datenwort gesendet wird. Die weitere Behandlung des Alarms erfolgt in der bereits beschriebenen Weise.

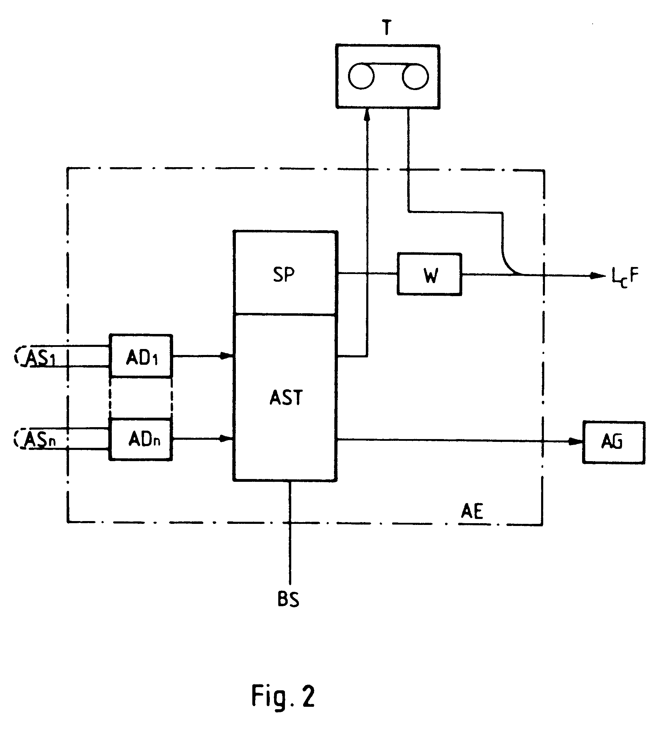

Der Aufbau der Alarmeinrichtung AE wird anhand des Blockschaltbildes in Fig. 2 näher erläutert. Die Alarmeinrichtung AE weist eine eigene Steuereinrichtung AST auf, an welcher die Alarmdetektoren AD1 bis ADn angeschlossen sind. Sobald ein Alarmdetektor AD anspricht, wird dieser von der Steuereinrichtung AST identifiziert und entweder ein entsprechendes, die Art des Alarms kennzeichnendes Datenwort über das Bussystem BS an die Steuereinrichtung ST der Fernsprechnebenstellen- oder Reihenanlage gesendet (siehe Fig. 1) oder die der Alarmart zugeordnete Rufnummer im Speicher SP abgerufen und in Form von Datenworten über das Bussystem BS der Steuereinrichtung ST übermittelt. Ebenso kann aufgrund des Ansprechens eines Alarmdetektors AD die Alarmanzeigeeinrichtung AG zur Erzeugung einer optischen und/oder akustischen Anzeige gesteuert werden.

Der Speicher SP der Steuereinrichtung AST kann auch in digitalisierter Form die Sprachsignale für Ansagen enthalten, welche durch einen Digital/Analog-Wandler in analoge Sprachsignale umgesetzt und dem Koppelfeld KF zugeführt werden.

Ebenso kann anstelle des digitalen Sprachspeichers oder auch zusätzlich zu diesem ein analoger Sprachspeicher T vorhanden sein, welcher ebenfalls Ansagetexte enthält. Die Ansagetexte können beispielsweise Hinweise auf die Art der Alarmmeldung geben, wobei die Auswahl der einzelnen Ansagetexte beispielsweise in Abhängigkeit von dem jeweiligen Alarmdetektor AD erfolgt.

Eine gemäß der Erfindung ausgestattete Fernsprechnebenstellen- oder Reihenanlage ist in der Lage, Alarmmeldungen aufzunehmen und nach unterschiedlichen Alarmarten entsprechende optische und akustische Anzeigen und Ansagen an sämtlichen Einrichtungen einer Fernsprechnebenstellen- oder Reihenanlage vorhandenen Einrichtungen oder auch an Zusatzeinrichtungen zu veranlassen.

Es wird noch darauf hingewiesen, daß der selbsttätige Aufbau von Verbindungen zu internen Teilnehmern einschließlich Torstation zur Aussendung eines Warntons über den Lautsprecher derselben und externen Teilnehmern in bekannter Weise erfolgt, d.h. daß eine Hörtonüberwachung vorhanden ist, und im Besetztfall des gewünschten Teilnehmeranschlusses der Wahlvorgang solange wiederholt wird, bis dieser Anschluß wieder frei ist, daß bei Nichtmelden des gewünschten Teilnehmeranschlusses evtl. ein anderer Teilnehmeranschluß angewählt wird und daß bei Besetztsein sämtlicher Verbindungsleitungen VL ebenfalls der Verbindungsaufbau wiederholt wird, sobald eine freie Verbindungsleitung VL zur Verfügung steht.

Der Teilnehmerapparat TR, in dessen Teilnehmeranschlußleitung TAL ein Alarmdetektor AD eingeschleift ist, kann auch mit einem Tonband- oder Ansagegerät ausgestattet sein (Fig. 1). Bei Ansprechen des Alarmdetektors kann die Steuereinrichtung ST veranlaßt werden, diesen Teilnehmeranschluß mit einem vorbestimmten Teilnehmeranschluß zu verbinden, woraufhin anschließend durch das Tonband- oder Ansagegerät ein vorbestimmter Ansagetext dem gerufenen Teilnehmeranschluß übermittelt wird.

Es ist auch denkbar, die Reihenfolge des Ansprechens der einzelnen Alarmdetektoren zu überwachen und in Abhängigkeit von bestimmten Reihenfolgen unterschiedliche Alarme auszulösen oder unterschiedliche Teilnehmeranschlüsse anzusteuern. Das gleiche gilt auch für eine zeitliche Überwachung des Ansprechens der Alarmdetektoren, wobei beispielsweise vor Ablauf einer bestimmten Zeit bzw. nach Ablauf einer bestimmten Zeit bei Ansprechen eines Alarmdetektors unterschiedliche Alarme ausgelöst bzw. unterschiedliche Teilnehmeranschlüsse angesteuert werden.

## Patentansprüche

1. Kleine Fernsprechnebenstellenanlage, insbesondere Reihenanlage mit einem durch eine Steuereinrichtung einstellbaren Koppelfeld (KF), dessen Ein- bzw. Ausgänge mit Anschlußschaltungen (ASS) zum Anschluß von Teilnehmeranschlußleitungen (TAL), Verbindungsleitungen, usw. verbunden sind, wobei in den Anschlußschaltungen der Empfang und die Aussendung der Gleichstomsignalisierungzeichen erfolgt und zur Übermittlung der Signalisierungsinformationen sämtliche Anschlußschaltungen über ein Bussystem (BS) mit der Steuereinrichtung (ST) verbunden sind,
dadurch gekennzeichnet,
daß eine Alarmeinrichtung (AE) vorgesehen ist, welche anstelle einer Anschlußschaltung (ASS) einsetzbar ist, daß diese einen oder mehrere Alarmdetektoren (AD) aufweist, welche jeweils mit einer Alarmschleife (AS) verbindbar sind und daß die Alarmeinrichtung (AE) bei Ansprechen eines Alarmdetektors (AD) die Steuereinrichtung (ST) der Fernsprechnebenstellen- oder Reihenanlage über das Bussystem (BS) veranlaßt wird, eine Verbindung zu einem oder mehreren vorbestimmten, internen oder externen Teilnehmeranschluß- bzw. Teilnehmeranschlüssen aufzubauen.

2. Kleine Fernsprechnebenstellenanlage, insbesondere Reihenanlage nach Anspruch 1,
dadurch gekennzeichnet,
daß die Alarmeinrichtung (AE) eine eigene Steuereinrichtung (AST) mit einem Speicher mit mindestens einer Kennung oder Rufnummer aufweist.

3. Kleine Fernsprechnebenstellenanlage, insbesondere Reihenanlage nach Anspruch 1 oder 2,
dadurch gekennzeichnet,
daß in Abhängigkeit vom Ansprechen unterschiedlicher Alarmdetektoren (AD) unterschiedliche Teilnehmeranschlüsse angewählt werden.

4. Kleine Fernsprechnebenstellenanlage, insbesondere Reihenanlage nach einem der Ansprüche 1 bis 3,
dadurch gekennzeichnet,
daß die Alarmeinrichtung (AE) einen Sprachspeicher (SP) aufweist, dessen Inhalt nach Beendigung des Freitons in die Verbindung eingespeist wird.

5. Kleine Fernsprechnebenstellenanlage, insbesondere Reihenanlage nach einem der Ansprüche 1 bis 4,
dadurch gekennzeichnet,
daß durch die Steuereinrichtung (AST) der Alarmeinrichtung (AE) ein Anrufbeantworter bzw. Tonbandgerät (T) steuerbar ist, welcher bzw. welches an die Verbindung anschaltbar ist.

6. Kleine Fernsprechnebenstellenanlage, insbesondere Reihenanlage nach einem der Ansprüche 1 bis 5,
dadurch gekennzeichnet,
daß das Ansprechen eines Alarmdetektors (AD) optisch und/oder akustisch angezeigt wird.

7. Kleine Fernsprechnebenstellenanlage, insbesondere Reihenanlage nach einem der Ansprüche 1 bis 6,
dadurch gekennzeichnet,
daß an einem oder mehreren Fernsprechapparaten der Alarm optisch und/oder akustisch angezeigt wird.

8. Kleine Fernsprechnebenstellenanlage, insbesondere Reihenanlage nach einem der Ansprüche 1 bis 5,
dadurch gekennzeichnet,
daß der Ansagetext evtl. in Abhängigkeit von der Alarmschleife (AS) an einen bestimmten Teilnehmeranschluß übermittelt und dort über die Lauthöreinrichtung des FernsprechapparateS wiedergegeben wird.

9. Kleine Fernsprechnebenstellenanlage, insbesondere Reihenanlage nach Anspruch 1,
dadurch gekennzeichnet,
daß durch die Betätigung einer Notruftaste am Fernsprechapparat ein entsprechendes Datenwort an einer der beiden Steuereinrichtungen (ST, AST) gesendet wird und diese eine Alarmauslösung zur Folge hat.

10. Kleine Fernsprechnebenstellenanlage, insbesondere Reihenanlage nach einem der Ansprüche 1 bis 9,
dadurch gekennzeichnet,
daß die Alarmeinrichtung (AE) von außen anwählbar ist und evtl. aufgrund einer Kennworteingabe im aktiven Zustand nach Durchschaltung der Verbindung einen Hörton oder eine Ansage einspeist.

11. Kleine Fernsprechnebenstellenanlage, insbesondere Reihenanlage nach Anspruch 10,
dadurch gekennzeichnet,
daß die Alarmeinrichtung (AE) durch mehrere Rufnummern erreichbar ist und durch Wahl einer Rufnummer die Alarmeinrichtung aktivierbar ist.

12. Kleine Fernsprechnebenstellenanlage, insbesondere Reihenanlage nach Anspruch 6, 10 oder 11,
dadurch gekennzeichnet,
daß durch Wahl einer Rufnummer die optische und/oder akustische Alarmanzeige aktivierbar ist.

13. Kleine Fernsrechnebenstellenanlage, insbesondere Reihenanlage nach einem der Ansprüche 1 bis 12,
dadurch gekennzeichnet,
daß die Alarmeinrichtung (AE) ebenso wie eine Anschlußschaltung (ASS) auf einer Steckbaugruppe untergebracht ist und daß bei aktivierter Alarmeinrichtung (AE) ein Herausziehen derselben eine Alarmgabe durch die Steuereinrichtung (ST) der Fernsprechnebenstellen- oder Reihenanlage erfolgt.

14. Kleine Fernsprechnebenstellenanlage, insbesondere Reihenanlage nach einem der Ansprüche 1 bis 13,
dadurch gekennzeichnet,
daß in die Teilnehmeranschlußleitung (TAL) beispielsweise in der Anschlußdose ein Alarmdetektor (AD) eingeschleift ist, welcher bei Ansprechen ein Signal erzeugt, welches die Aussendung eines entsprechenden Datenwortes an die Steuereinrichtung (ST) zur Folge hat.

15. Kleine Fernsprechnebenstellenanalge, insbesondere Reiheranlage nach Anspruch 14,
dadurch gekennzeichnet,
daß aufgrund des Datenwortes die Steuereinrichtung (ST) einen Verbindungsaufbau von dem betreffenden Teilnehmeranschluß zu einem vorbestimmten Teilnehmeranschluß veranlaßt.

16. Kleine Fernsprechnebenstellenanlage, insbesondere Reihenanlage nach Anspruch 15,
dadurch gekennzeichnet,
daß der betreffende Teilnehmeranschluß bzw. Fernsprechapparat mit einem Tonbandgerät ausgestattetist und daß im Alarmfall ein Ansagetext dem vorbestimmten Teilnehmeranschluß übermittelt wird.

17. Kleine Fernsprechnebenstellenanlage, insbesondere Reihenanlage nach einem der vorhergehenden Ansprüche,
dadurch gekennzeichnet,
daß in Abhängigkeit vom Ansprechen der Alarmdetektoren (AD) in einer oder mehreren bestimmten Reihenfolgen unterschiedliche Alarme ausgelöst bzw. unterschiedliche Teilnehmeranschlüsse angesteuert werden.

18. Kleine Fernsprechnebenstellenanlage, insbesondere Reihenanlage nach Anspruch 17,
dadurch gekennzeichnet,
daß in Abhängigkeit vom Ansprechen der Alarmdedektoren (AD) innerhalb bestimmter vorgegebener Zeiten unterschiedliche Alarme ausgelöst bzw. unterschiedliche Teilnehmeranschlüsse angesteuert werden.

## Claims

1. Small private telephone branch exchange, in particular intercommunications exchange with a coupling field (KF), which is settable through a control equipment and the inputs and outputs of which are respectively connected with connecting circuits (ASS) for the connection of subscriber lines (TAL), connecting lines and so forth, wherein the reception and the emission of the direct current signalling signs takes place in the connecting circuits and all connecting circuits are connected with the control equipment (ST) by way of a bus system (BS) for the transmission of the signalling information, characterised thereby, that an alarm equipment (AE) is provided, which is deployable in place of a connecting circuit (ASS), that this displays one or more alarm detectors (AD), which are each connectable with a respective alarm loop (AS) and that the alarm equipment (AE) on the response of an alarm detector (AD) causes the control equipment (ST) of the private telephone branch or intercommunications exchange to establish a connection to one or more predetermined internal or external subscriber stations.

2. Small private telephone branch exchange, in particular intercommunications exchange according to claim 1, characterised thereby, that the alarm equipment (AE) displays an individual control equipment (AST) with a storage device with at least one identification or calling number.

3. Small private telephone branch exchange, in particular intercommunications exchange according to claim 1 or 2, characterised thereby, that different subscriber stations are dialled in dependence on the response of different alarm detectors (AD).

4. Small private telephone branch exchange, in particular intercommunications exchange according to one of the claims 1 to 3, characterised thereby, that the alarm equipment (AE) displays a speech storage device (SP), the contents of which are fed into the connection after the end of the free tone.

5. Small private telephone branch exchange, in particular intercommunications exchange according to one of the claims 1 to 4, characterised thereby, that a call-answering machine or an audio-tape device (T), which is switchable to the connection, is controllable by the control equipment (AST) of the alarm equipment (AE).

6. Small private telephone branch exchange, in particular intercommunications exchange according to one of the claims 1 to 5, characterised thereby, that the response of an alarm detector (AD) is indicated optically and/or acoustically.

7. Small private telephone branch exchange, in particular intercommunications exchange according to one of the claims 1 to 6, characterised thereby, that the alarm is indicated optically and/or acoustically at one or more telephone sets.

8. Small private telephone branch exchange, in particular intercommunications exchange according to one of the claims 1 to 5, characterised thereby, that the announcement text is transmitted to a certain subscriber station, possibly in dependence on the alarm loop (AS), and reproduced there by way of the loudspeaking equipment of the telephone set.

9. Small private telephone branch exchange, in particular intercommunications exchange according to claim 1, characterised thereby, that through the actuation of an emergency call key at the telephone set, a corresponding data word is sent to one of both the control equipments (ST, AST) and this has the consequence of an alarm being triggered.

10. Small private telephone branch exchange, in particular intercommunications exchange according to one of the claims 1 to 9, characterised thereby, that the alarm equipment (AE) can be dialled from outside and, in the active state after the establishment of the connection, feeds in an audible tone or an announcement, possibly on the basis of a password input.

11. Small private telephone branch exchange, in particular intercommunications exchange according to claim 10, characterised thereby, that the alarm equipment (AE) can be reached by several calling numbers and is activatable by the selection of a calling number.

12. Small private telephone branch exchange, in particular intercommunications exchange according to claim 6, 10 or 11, characterised thereby, that the optical and/or acoustic alarm indication is activatable by the selection of a calling number.

13. Small private telephone branch exchange, in particular intercommunications exchange according to one of the claims 1 to 12, characterised thereby, that the alarm equipment (AE) just as a connecting circuit (ASS) are accommodated on a plug-in assembly and that, when the alarm equipment (AE) is activated, an extraction of the same causes an alarm to be given by the control equipment (ST) of the private telephone branch or intercommunications exchange.

14. Small private telephone branch exchange, in particular intercommunications exchange according to one of the claims 1 to 13, characterised thereby, that an alarm detector (AD), which on response generates a signal which has the consequence of the emission of a corresponding data word to the control equipment (ST), is looped into the subscriber terminal line (TAL), for example in the junction box.

15. Small private telephone branch exchange, in particular intercommunications exchange according to claim 14, characterised thereby, that the control equipment (ST) by reason of the data word causes a connection to be established from the susbcriber terminal concerned to a predetermined subscriber terminal.

16. Small private telephone branch exchange, in particular intercommunications exchange according to claim 15, characterised thereby, that the subscriber terminal or the telephone set, which is concerned, is equipped with an audio-tape device and that, in the case of an alarm, an announcement text is transmitted to predetermined subscriber terminal.

17. Small private telephone branch exchange, in particular intercommuncations exchange according to one of the preceding claims, characterised thereby, that different alarms are triggered or different subscriber terminals are driven selectably in dependence on the response of the alarm detectors (AD) in one or more certain sequences.

18. Small private telephone branch exchange, in particular intercommuncations exchange according to claim 17, characterised thereby, that different alarms are triggered or different subscriber terminals are driven selectably in dependence on the response of the alarm detectors (AD) within certain preset times.

## Revendications

1. Petite installation téléphonique privée, notamment central privé comprenant un champ de couplage réglable (KF) réglable au moyen d'un dispositif de commande et dont les entrées et sorties sont raccordées à des circuits de raccordement (ASS) pour le raccordement de lignes d'abonnés (TAL), de lignes de jonction, etc., et dans lequel la réception et l'émission de signaux de signalisation en courant continu s'effectuent dans les circuits de réception et tous les circuits de raccordement sont raccordés, pour la transmission des informations de signalisation, au dispositif de commande (ST), par l'intermédiaire d'un système de bus (BS),
caractérisée par le fait
qu'il est prévu un dispositif d'alarme (AE), qui peut être utilisé à la place d'un circuit de raccordement (ASS), que ce dispositif comporte un ou plusieurs détecteurs d'alarme (AD), qui peuvent être raccordés respectivement à une boucle d'alarme (AS), et que, lors de la réponse d'un détecteur d'alarme (AD), le dispositif d'alarme (AE) déclenche par l'intermédiaire du système de bus (BS), le dispositif de commande (ST) de l'installation téléphonique privée ou du central privé pour qu'elle établisse une liaison avec un ou plusieurs bornes ou postes d'abonnés internes ou externes, prédéterminés.

2. Petite installation téléphonique privée, notamment central privé selon la revendication 1, caractérisée en ce que le dispositif d'alarme (AE) possède un dispositif de commande propre (AST) comportant une mémoire possédant au moins un indicatif ou un numéro d'appel.

3. Petite installation téléphonique privée, notamment central privé selon la revendication 1 ou 2, caractérisée en ce que différents postes d'abonnés sont sélectionnés en fonction de la réponse de différents détecteurs d'alarme (AD).

4. Petite installation téléphonique privée, notamment central privé selon l'une des revendications 1 à 3, caractérisée en ce que le dispositif d'alarme (AE) contient une mémoire de signaux vocaux (SP), dont le contenu est injecté dans la liaison, à la fin de la tonalité d'état libre.

5. Petite installation téléphonique privée, notamment central privé selon l'une des revendications 2 à 4, caractérisée en ce que le dispositif de commande (AST) du dispositif d'alarme (AE) peut commander un répondeur d'appels ou un magnétophone (T), qui peut être raccordé à la liaison.

6. Petite installation téléphonique privée, notamment central privé selon l'une des revendications 1 à 5, caractérisée en ce que la réponse d'un détecteur d'alarme (AD) est affichée optiquement et/ou est indiquée optiquement et/ou acoustiquement.

7. Petite installation téléphonique privée, notamment central privé selon l'une des revendications 1 à 6, caractérisée en ce que l'alarme est indiquée optiquement et/ou acoustiquement à un ou plusieurs appareils téléphoniques.

8. Petite installation téléphonique privée, notamment central privé selon l'une des revendications 1 à 5, caractérisée en ce que le texte d'annonce est transmis à un poste d'abonné déterminé, éventuellement en fonction de la boucle d'alarme (AS), et y est reproduit par l'intermédiaire du dispositif formant haut-parleur du poste téléphonique.

9. Petite installation téléphonique privée, notamment central privé selon la revendication 1, caractérisée en ce qu'un mot de données correspondant est envoyé, au moyen de l'actionnement d'une touche d'appel dans le poste téléphonique, à l'un des deux dispositifs de commande (ST, AST), et amène cette dernière à déclencher une alarme.

10. Petite installation téléphonique privée, notamment central privé selon l'une des revendications 1 à 9, caractérisée en ce que le dispositif d'alarme (AE) peut être sélectionné de l'extérieur et, éventuellement sur la base de l'introduction d'un mot caractéristique, introduit à l'état actif, après interconnexion de la liaison, une tonalité ou une annonce.

11. Petite installation téléphonique privée, notamment central privé selon la revendication 10, caractérisée en ce que le dispositif d'alarme (AE) peut être atteint au moyen de plusieurs numéros d'appel et peut être activé grâce au choix d'un numéro d'appel.

12. Petite installation téléphonique privée, notamment central privé selon la revendication 6, 10 ou 11, caractérisée en ce que le dispositif optique et/ou acoustique d'indication d'alarme peut être activé grâce au choix d'un numéro d'appel.

13. Petite installation téléphonique privée, notamment central privé selon l'une des revendications 1 à 12, caractérisée en ce que le dispositif d'alarme (AE) ainsi qu'un circuit de raccordement (SS) sont logés sur un module enfichable et que, lorsque le dispositif d'alarme (AE) est activé, une extraction de ce dispositif provoque la délivrance d'une alarme par le dispositif de commande (ST) de l'installation téléphonique privée ou de l'installation série.

14. Petite installation téléphonique privée, notamment central privé selon l'une des revendications 1 à 13, caractérisée en ce que dans la ligne d'abonné (TAL) est inséré en boucle par exemple dans la prise, un détecteur d'alarme (AD), qui, lorsqu'il répond, produit un signal qui entraîne l'envoi d'un mot de données correspondant en direction du dispositif de commande (SA).

15. Petite installation téléphonique privée, notamment central privé selon la revendication 14, caractérisée en ce que sur la base du mot de données, le dispositif de commande (ST) déclenche l'établissement d'une liaison depuis le poste d'abonné considéré à un poste d'abonné prédéterminé.

16. Petite installation téléphonique privée, notamment central privé selon la revendication 15, caractérisée en ce que l'appareil ou le poste d'abonné considéré est équipé d'un magnétophone et que, dans le cas d'une alarme, un texte d'annonce est retransmis à l'appareil téléponique prédéterminé.

17. Petite installation téléphonique privée, notamment central privé selon l'une des revendications précédentes, caractérisée en ce qu'en fonction de la réponse des détecteurs d'alarme (AD), différentes alarmes sont déclenchées ou différents appareils d'abonnés sont commandés selon une ou plusieurs séquences déterminées.

18. Petite installation téléphonique privée, notamment central privé selon la revendication 17, caractérisée en ce qu'en fonction de la réponse des détecteurs d'alarme (AD), différentes alarmes sont déclenchées ou différents appareils d'abonnés sont commandés pendant des intervalles de temps donnés prédéterminés.
